# EUROPEAN PATENT SPECIFICATION

(11) **EP 2 612 769 B1**
(45) Date of publication and mention of the grant of the patent: **02.11.2016**
(21) Application number: 11821973.2
(22) Date of filing: 02.09.2011
(51) Int. Cl.: B60C 11/11, B60C 11/01, B60C 11/04, B60C 11/13, B60C 11/03, B60C 11/12

(54) **PNEUMATIC TIRE**
LUFTREIFEN
PNEUMATIQUE

(30) Priority: 02.09.2010 JP 2010196873
(43) Date of publication of application: 10.07.2013
(73) Proprietor: Bridgestone Corporation, Tokyo 104-8340 (JP)
(72) Inventor: NARUO, Makoto, Tokyo 104-8340 (JP)
(74) Representative: Lamb, Martin John Carstairs
(86) International application number: PCT/JP2011/070073
(87) International publication number: WO 2012/029959

(56) References cited:
- JP-A- 2002 029 222
- JP-A- 2002 114 011
- JP-A- 2004 276 861
- JP-A- 2010 095 196

## Description

### Technical Field

The present invention relates to a pneumatic tire with a block-pattern formed tread.

### Background Art

The pneumatic tire of Patent Document 1 below is provided with plural blocks partitioned by plural circumferential direction grooves and plural width direction grooves formed in a tread. Tapered portions that extend in the width direction of each of the blocks are provided at the tread-in end side and the kick-out end side of each of the plural blocks. Development of heel-and-toe wear in the tire circumferential direction is thereby suppressed. Attention is drawn to the disclosure of JP 2002-029222.

### Related Documents

Patent Document 1: Japanese Patent Application Laid-Open (JP-A) No. 2006-218946

### DISCLOSURE OF INVENTION

### Technical Problem

However, in a pneumatic tire such as the one described above, external damage is sometimes imparted to corner portions provided on the tread-in side of the blocks such as when the tread is imparted with a large force from a non-smooth road surface (for example when there are stones on the road surface).

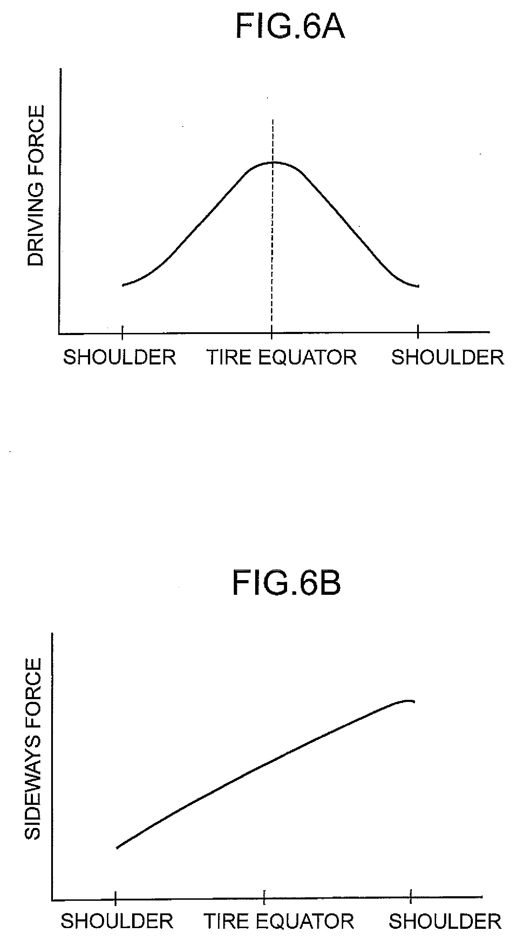

The present inventor, on investigating external damage to blocks, have discovered that in pneumatic tires mounted to the driven axle of a vehicle, the corner portions on the tire width direction inside of the tread-in side of blocks disposed on the tire equator side of the tread are more susceptible to external damage. This is because in a pneumatic tire that transmits vehicle driving force to a road surface, as illustrated in Fig. 6A, the distribution of driving force transmitted from the tread to the road surface is greater on the tire equator side than on the shoulder sides.

However, when the vehicle is negotiating a curve, the tread is imparted with a sideways force from the road surface. The present inventors, on investigating external damage of blocks from sideways force, have discovered that the corner portions on the tire width direction outside of the tread-in side of blocks disposed on the shoulder side of the tread are more susceptible to external damage. This is because, as illustrated in Fig. 6B, the side force distribution on the tread is biased towards the shoulder side.

In consideration of the above circumstances, an object of the present invention is to obtain a pneumatic tire capable of raising the resistance to external damage of blocks provided at a tread.

### Solution to Problem

A pneumatic tire according to a first aspect of the present invention includes: a tread formed with plural blocks partitioned by plural circumferential direction grooves extending along a tire circumferential direction and by plurality of width direction grooves that intersect with the circumferential direction grooves; and inside notched portions formed by notching corner portions on tire width direction insides of tread-in sides of the blocks; wherein the inside notched portions provided at blocks nearest, in the tire width direction, to the tire equator are notched to a greater extent than the inside notched portions provided at other blocks.

Note that when the rotation direction of the present pneumatic tire is stipulated as one of the tire circumferential directions, reference to the "tread-in side of the blocks" means the side of the block on that tire circumferential direction side, however when the rotation direction of the tire is not stipulated, both tire circumferential direction sides of the block may be the "tread-in side of the blocks". Namely, when the rotation direction of the tire is not particularly stipulated, configuration is with the inside notched portions formed both to the corner portions on the tire width direction inside on one tire circumferential direction side of the blocks and to the corner portions on the tire width direction inside of the other tire circumferential direction side of the blocks. This point also applies to the second aspect to the sixth aspect of the pneumatic tire according to the present invention as explained below.

In the pneumatic tire according to the first aspect of the present invention the inside notched portions are formed to the plural blocks formed in the tread by notching the corner portions on the tire width direction inside of tread-in sides of the blocks. Namely, due to omitting the corner portions at the tire width direction inside of the tread-in side of the blocks which are susceptible to external damage, the resistance to external damage of the blocks can be raised. Moreover, the inside notched portions provided at the blocks nearest in the tire width direction to the tire equator are notched to a greater extent than the inside notched portions provided at other blocks. Namely, this invention increases the size of the inside notched portions provided at the blocks closest to the tire equator in the tire width direction where, due to the ground contact pressure at the tire equator side of the tread being higher than at the shoulder sides, the blocks are more susceptible to external damage. The resistance to external damage of the blocks can accordingly be efficiently enhanced. In particular, when the present pneumatic tire is mounted on the driven axle of a vehicle, the distribution of the driving force transmitted from the tread to the road surface is greater at the tire equator side than at the shoulder sides, and so it is effective to form larger inside notched portions to the blocks provided nearest in the tire width direction to the tire equator.

A pneumatic tire according to a second aspect of the present invention is the first aspect, wherein: outside notched portions are formed at least at blocks that, out of the plurality of blocks, are disposed further to the tire width direction outside than the blocks nearest, in the tire width direction, to the tire equator by notching corner portions on the tire width direction outsides of the tread-in sides; and the outside notched portions provided at the blocks disposed at the outermost sides in the tire width direction are notched to a greater extent than the outside notched portions provided at other blocks.

In the pneumatic tire of the second aspect of the present invention, the outside notched portions are formed at least at the blocks out of the plural blocks provided at the tread that are disposed further to the tire width direction outside than the nearest blocks in the tire width direction to the tire equator, by notching corner portions of the tire width direction outsides of the tread-in sides. Namely, out of the plural blocks, the corner portions more susceptible to external damage on the tire width direction outsides of the tread-in sides are omitted in at least the blocks further to the tire width direction outsides than the blocks nearest in the tire width direction to the tire equator, thereby enabling the resistance to external damage of the blocks to be raised. Moreover, the outside notched portions provided at the blocks disposed at the outermost sides in the tire width direction are notched to a greater extent than the outside notched portions provided at the other blocks. In other words, since the sideways force input at the tire width direction outside of the tread (shoulder side) is greater than at the tire equator side this is a location where blocks are more susceptible to external damage during vehicle cornering. Thus in the present invention, the size of the outside notched portions provided at the blocks disposed at the outermost sides in the tire width direction is made larger. The resistance to external damage of the blocks can accordingly be raised efficiently.

A pneumatic tire of a third aspect of the present invention is the first aspect or the second aspect wherein a depth dimension along the block height direction of the inside notched portions is set within a range of from 40% to 50% of the block height dimension.

In a pneumatic tire according to the third aspect of the present invention, the depth dimension along the block height direction of the inside notched portions is set within the above range, and therefore in cases in which what are referred to as tie-bars (raised bottom portions) are provided at width direction grooves, configuration may be made such that the inside notched portions do not affect the tie-bars. The circumferential direction rigidity of the blocks can accordingly be raised by the tie-bars, enabling heel-and-toe wear of the blocks to be suppressed.

A pneumatic tire of a fourth aspect of the present invention is any one of the first aspect to the third aspect wherein at least a width direction groove that is, of the width direction grooves, nearest in the tire width direction to the tire equator, is inclined with respect to the tire width direction such that a tire width direction inside end is disposed further to a tire rotation direction front side than a tire width direction outside end, and is set with an angle of inclination with respect to the tire width direction within a range of from 5° to 15°.

In a pneumatic tire of the fourth aspect of the present invention, out of the plural width direction grooves, at least the width direction groove nearest in the tire width direction to the tire equator is set with an angle of inclination with respect to the tire width direction within the above range. The water discharge ability of the width direction groove can accordingly be raised, enabling wet weather performance to be enhanced.

A pneumatic tire of a fifth aspect of the present invention is any one of the first aspect to the fourth aspect wherein the blocks are set with a height dimension within a range of from 17mm to 23mm, with a dimension along the tire circumferential direction within a range of from 30mm to 50mm, and with a dimension along the tire width direction within a range of from 30mm to 50mm.

In a pneumatic tire according to the fifth aspect of the present invention, due to setting the size of the blocks within the above ranges, not only can uneven wear (mainly heel-and-toe wear) of the blocks, and defects (block tear) of the blocks be prevented, but the necessary block rigidity can also be secured. This is particularly effective for pneumatic tires of tire sizes from 295/80 R22.5 to 315/80 R22.5, 11 R22.5 to 12 R22.5, or 10.00 R20 to 11.00 R20.

A pneumatic tire of a sixth aspect of the present invention is any one of the first aspect to the fifth aspect wherein the inside notched portions have a notch length along an end edge on the tread-in side of a tread face of the blocks and a notch length along an end edge on the tire width direction inside of the tread face of the blocks that are both set within a range of from 2mm to 6mm.

In a pneumatic tire according to the sixth aspect of the present invention, due to setting the notch length of the inside notched portions within the above range, stones can be suppressed from lodging between the width direction grooves and the inside notched portions. Advantageous Effects of Invention

As explained above, in the pneumatic tire according to the present invention, the resistance to external damage of the blocks provided at the tread can be raised.

### BRIEF DESCRIPTION OF DRAWINGS

Fig. 1 is a plan view of a tread of a pneumatic tire according to an exemplary embodiment of the present invention.
Fig. 2 is an expanded plan view of a portion of Fig. 1.
Fig. 3 is a perspective view to explain a tire rotation direction.
Fig. 4 is a perspective view of a center block.
Fig. 5 is a plan view of a tread of a pneumatic tire according to a comparative example.
Fig. 6A-B: Fig. 6A is a graph explaining a distribution of driving force transmitted to a road surface from a tread of a pneumatic tire mounted to a driven axle of a vehicle; Fig. 6B is a graph explaining a distribution of sideways force on a tread.
Fig. 7 is a diagram for explaining an A-B, B-A method that is a tire test method.

### BEST MODE FOR CARRYING OUT THE INVENTION

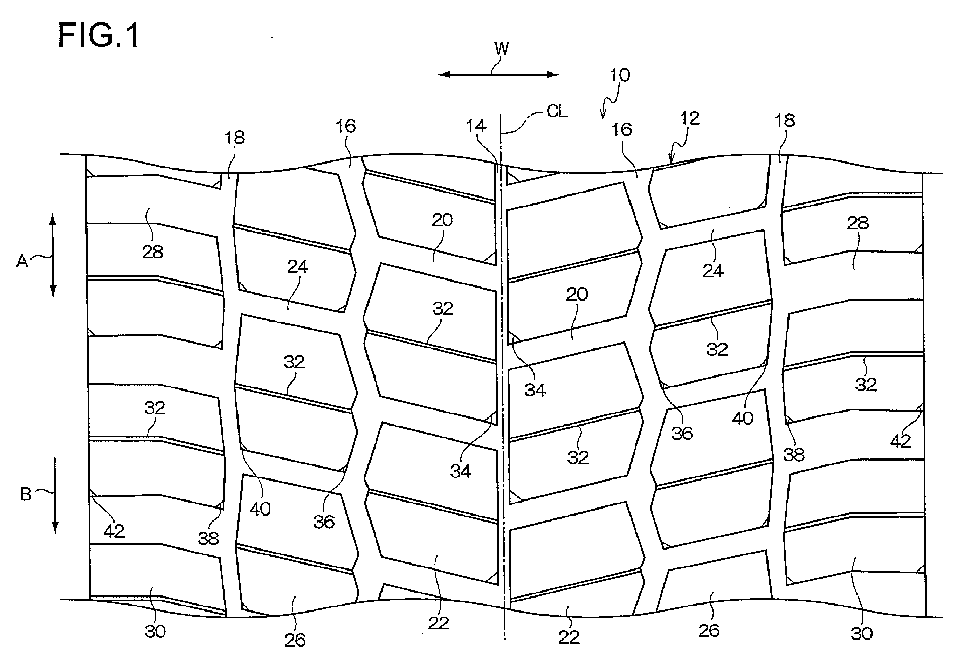

Explanation follows regarding an exemplary embodiment of a pneumatic tire of the present invention, with reference to Fig. 1 to Fig. 6. Note that the arrow A direction in each of the drawings indicates the tire circumferential direction, the arrow B direction indicates the tire rotation direction, and the arrow W direction indicates the tire width direction (tire axial direction).

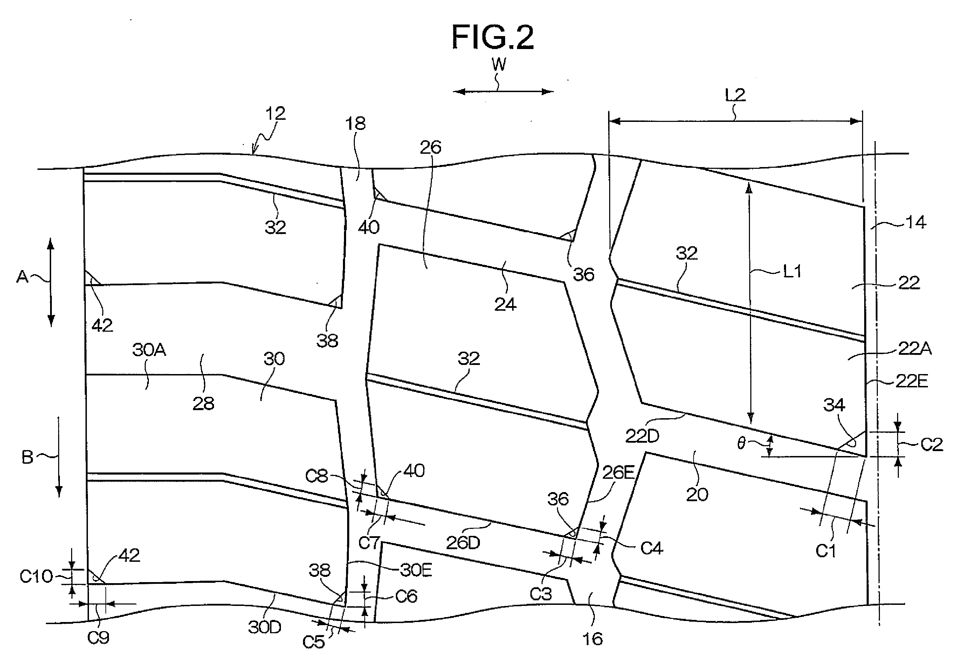

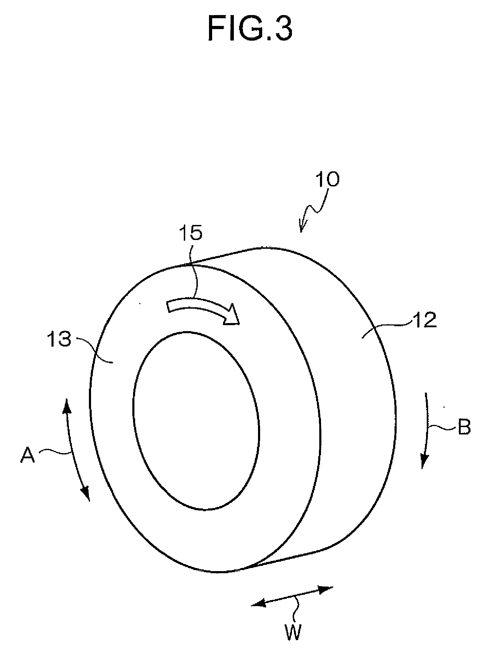

As illustrated in Fig. 1 and Fig. 2, a tread 12 of a pneumatic tire 10 according to the present exemplary embodiment (tire size: 315/80 R22.5) is formed with a stipulated rotation direction block pattern. As illustrated in Fig. 3, the stipulated rotation direction (the same direction as the arrow B direction) is indicated at a tire side section 13 by the arrow 15 and the word "ROTATION", not shown in the drawings. The block pattern is set with 6 rows, an even number, as the number of rows of blocks along the tire width direction. Detailed explanation follows.

In the tread 12, a first circumferential direction groove 14 is formed extending in a straight line shape running along the tire circumferential direction on the tire equator CL. A pair of second circumferential direction grooves 16 are formed extending in zigzag patterns along the tire circumferential direction at the tire width direction outsides of the first circumferential direction groove 14. A further pair of third circumferential direction grooves 18 are formed extending in zigzag patterns along the tire circumferential direction at the tire width direction outsides of the pair of second circumferential direction grooves 16. The depth dimensions of the first circumferential direction groove 14, the second circumferential direction grooves 16 and the third circumferential direction grooves 18 are set at 18.4mm (within a range of from 17mm to 23mm).

Plural first lug grooves 20 (width direction grooves) that connect together the first circumferential direction groove 14 and the second circumferential direction grooves 16 in the tire width direction are formed in rows around the tire circumferential direction between the first circumferential direction groove 14 and the second circumferential direction grooves 16. Plural center blocks 22 are accordingly formed in rows around the tire circumferential direction, partitioned between the first circumferential direction groove 14 and the second circumferential direction grooves 16.

Plural second lug grooves 24 (width direction grooves) that connect together the second circumferential direction grooves 16 and the third circumferential direction grooves 18 in the tire width direction are also formed in rows around the tire circumferential direction between the second circumferential direction grooves 16 and the third circumferential direction grooves 18. Plural second blocks 26 are accordingly formed in rows around the tire circumferential direction, partitioned between the second circumferential direction grooves 16 and the third circumferential direction grooves 18.

Plural third lug grooves 28 that extend towards the tire width direction outside are also formed in rows around the tire circumferential direction at the tire circumferential direction outsides of the third circumferential direction grooves 18. Plural shoulder blocks 30 are accordingly formed in rows around the tire circumferential direction, partitioned to the tire width direction outsides of the third circumferential direction grooves 18.

The size (rigidity) of the center blocks 22, the second blocks 26 and the shoulder blocks 30 satisfies the relationship "center blocks 22 > second blocks 26 > shoulder blocks 30", and each of the blocks 22, 26, 30 is set with a length dimension L1 along the tire circumferential direction (see Fig. 2) and a width dimension L2 along the tire width direction (see Fig. 2) that are both within a range of from 30mm to 50mm.

The first lug grooves 20 and the second lug grooves 24 are inclined with respect to the tire width direction so as to dispose their tire width direction inside ends further to the tire rotation direction front side (the arrow B direction side in Fig. 1 and Fig. 2) than their tire width direction outsides. An angle of inclination θ of the first lug grooves 20 and the second lug grooves 24 with respect to the tire width direction (see Fig. 2) is set within a range of from 5° to 15°.

The third lug grooves 28 are bent at tire width direction central portions, and are formed so as to have tire width direction inside portions that are inclined so as to align with the adjacent second lug grooves 24 and have tire width direction outside portions that are aligned with the tire width direction.

Sipes 32 are respectively formed to tire circumferential direction central portions of the center blocks 22, the second blocks 26, and the shoulder blocks 30. The sipes 32 formed to the center blocks 22 are formed so as to align with the first lug grooves 20, and the sipes 32 formed to the second blocks 26 are formed so as to align with the second lug grooves 24 and the sipes 32 formed to the shoulder blocks 30 are formed so as to align with the third lug grooves 28.

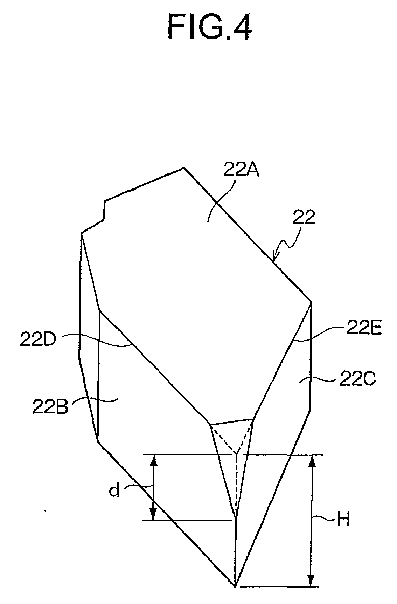

Furthermore, in the present exemplary embodiment, inside notched portions 34, 36, 38 are formed to the center blocks 22, the second blocks 26, and the shoulder blocks 30. As illustrated in Fig. 4, the inside notched portions 34 formed to the center blocks 22 are formed by notching tire width direction inside (tire equator CL side) corner portions on the tread-in side of the center blocks 22 from a tread face 22A (the ground contact face) of the center blocks 22 at an incline along the height direction of the center blocks 22. Namely, the inside notched portions 34 are formed by notching the corner portions between side faces 22B on the tread-in side and side faces 22C at the tire width direction inside of the center blocks 22 at an incline from the tread face 22A side of the center blocks 22, so that the amount of notching gradually decreases on progression towards a lower portion side of the center blocks 22 (are formed in tapered shapes).

Note that although omitted from illustration in perspective view, the inside notched portions 36 formed to the second blocks 26, and the inside notched portions 38 formed to the shoulder blocks 30 are also configured in fundamentally the same way as the inside notched portions 34.

The size of the inside notched portions 34, 36, 38 is set to satisfy the relationship "inside notched portions 34 ≥ inside notched portions 36 ≥ inside notched portions 38". More specifically, the inside notched portions 34 are set with a notch length C1 along tread-in side end edges 22D of the tread face 22A of the center blocks 22, and a notch length C2 along tire width direction inside end edges 22E of the tread face 22A, both set at 4mm (within a range of 2mm to 6mm).

The inside notched portions 36 are set with a notch length C3 along tread-in side end edges 26D of tread faces 26A (ground contact faces) of the second blocks 26, and a notch length C4 along tire width direction inside end edges 26E of the tread faces 26A, both set at 2mm (within a range of 2mm to 6mm).

The inside notched portions 38 are set with a notch length C5 along tread-in side end edges 30D of tread faces 30A (ground contact faces) of the shoulder blocks 30, and a notch length C6 along tire width direction inside end edges 30E of the tread faces 30A, both set at 2mm (within a range of 2mm to 6mm).

The depth dimension (see the annotation d in Fig. 4) of the inside notched portions 34, 36, 38 along the height direction of each of the blocks 22, 26, 30 is set within a specific range with respect to the height dimension of each of the blocks 22, 26, 30 (see annotation H in Fig. 4; in this case, the same as the depth dimension of each of the circumferential direction grooves 14, 16, 18 at 18.4mm).

Specifically, the depth dimension of the inside notched portions 34 is set at 13.4mm that is about 73% of the height dimension of the center blocks 22. The depth dimension of the inside notched portions 36 is set at 12.0mm that is about 65% of the height dimension of the second blocks 26. The depth dimension of the inside notched portions 38 is set at 10.7mm that is about 58% of the height dimension of the shoulder blocks 30.

Moreover, in the present exemplary embodiment, as illustrated in Fig. 1 and Fig. 2, outside notched portions 40, 42 are formed in the second blocks 26 and the shoulder blocks 30. The outside notched portions 40 formed to the second blocks 26 are formed by notching tire width direction outside corner portions on the tread-in side of the second blocks 26 from the tread faces 26A of the second blocks 26 at an incline along the height direction of the second blocks 26, with the notching amount gradually decreasing on progression towards a lower portion side of the center blocks 22 (formed in a tapered shape).

The outside notched portions 42 formed to the shoulder blocks 30 are formed by notching tire width direction outside corner portions on the tread-in side of the shoulder blocks 30 at an incline from the tread faces 30A of the shoulder blocks 30 towards a lower portion side of the shoulder blocks 30, with the notching amount gradually decreasing on progression towards the lower portion side of the shoulder blocks 30 (formed in a tapered shape).

Note that the size of the outside notched portions 40, 42 is set so as to satisfy the relationship "outside notched portions 42 ≥ outside notched portions 40". Specifically, the outside notched portions 40 are set with a notch length C7 along the tread-in side end edges 26D of the tread faces 26A (ground contact face) of the second blocks 26 and a notch length C8 along the tire width direction inside end edges 26E of the tread faces 26A, both set at 2mm (within a range of 2mm to 6mm).

The outside notched portions 42 are set with a notch length C9 along the tread-in side end edges 30D of the tread faces 30A (ground contact face) of the shoulder blocks 30, and a notch length C10 along the tire width direction inside end edges 30E of the tread faces 30A, both set at 2.5mm (within a range of 2mm to 6mm).

The depth dimension of the outside notched portions 40, 42 along the height direction of each of the blocks 26, 30 is set within a specific range with respect to the height dimension of each of the blocks 26, 30 (18.4mm in the present exemplary embodiment).

Specifically, the depth dimension of the outside notched portions 40 is set at 12.0mm that is about 65% of the height dimension of the second blocks 26, and the depth dimension of the outside notched portions 42 is set at 10.7mm that is about 58% of the height dimension of the shoulder blocks 30.

Note that the present exemplary embodiment is a configuration in which outside notched portions are not provided at the center blocks 22, however the present invention is not limited thereto and configuration may be made with outside notched portions similar to those of the outside notched portions 40, 42 provided at the center blocks 22. In such cases, the size of each of the outside notched portions is preferably set so as to satisfy the relationship "outside notched portions 42 ≥ outside notched portions 40 ≥ outside notched portions provided at the center blocks 22",

Moreover, in the present exemplary embodiment, the surfaces of the inside notched portions 34, 36, 38 and the outside notched portions 40, 42 are formed in flat plane shapes, however the present invention is not limited thereto. The surfaces of the inside notched portions and the outside notched portions may be configured formed with curved plane shapes, or may be formed with an irregular profile with slight indentations and projections.

Explanation follows regarding operation and advantageous effects of the present exemplary embodiment.

In the pneumatic tire 10 configured as described above, the center blocks 22, the second blocks 26 and the shoulder blocks 30 formed to the tread 12 are formed with the inside notched portions 34, 36, 38 by notching the corner portions on the tire width direction inside of the tread-in side. Namely, since the corner portions at the tire width direction inside of the tread-in side of each of the blocks 22, 26, 30 that are more susceptible to external damage are omitted, the resistance to external damage of each of the blocks 22, 26 30 can be increased.

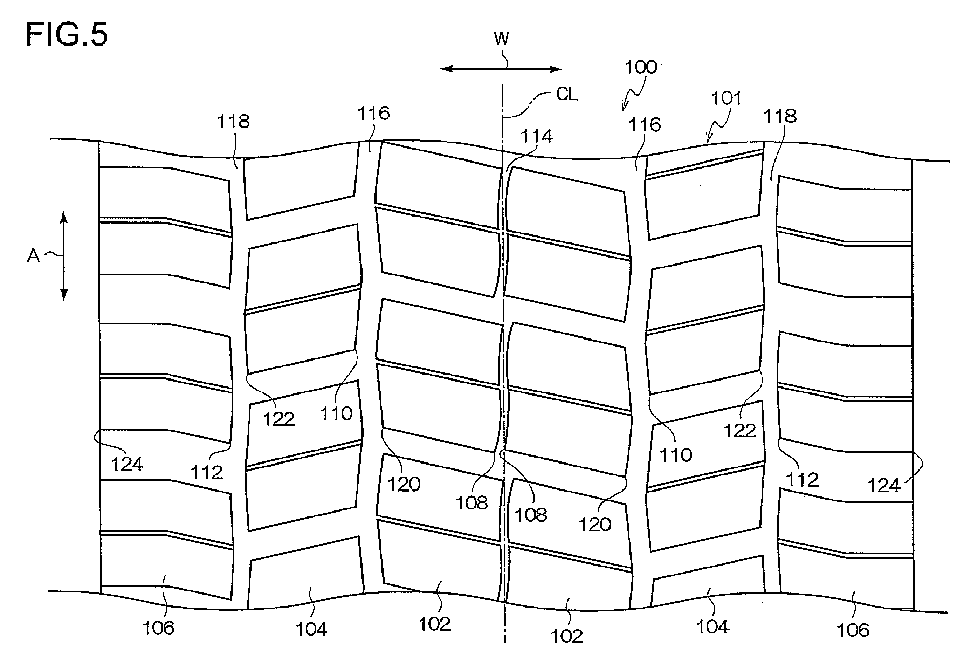

Namely, as in a related pneumatic tire 100 illustrated in Fig. 5 (a comparative example with tire size: 315/80 R22.5), in a case in which corner portions 108, 110, 112 are provided on the tire equator CL side of the tread-in side of center blocks 102, second blocks 104 and shoulder blocks 106, sometimes the corner portions 108, 10, 112 are imparted with external damage, such as when a tread 101 is imparted with a large force from a non-smooth road surface (for example when there are stones on the road surface). However, this can be avoided n the present exemplary embodiment. Note that, as illustrated in Fig. 5, the related pneumatic tire 100 is a tire in which the rotation direction is not stipulated, with all of circumferential direction grooves 114,116,118 formed in a zigzag shape, and the corner portions 108, 110, 112 formed at substantially 90° in tread plan view.

Moreover, in the present exemplary embodiment, the inside notched portions 34 provided at the center blocks 22 that are nearest to the tire equator CL in the tire width direction are formed larger than the inside notched portions 36, 38 provided at the other blocks 26, 30. Namely, due to the tire equator side CL of the tread 12 having a higher ground contact pressure than the shoulder sides, there is a particular susceptibility to external damage at the center blocks 22 and so in the present exemplary embodiment particularly large sized inside notched portions 34 are provided at the center blocks 22. The resistance to external damage of the center blocks 22 can accordingly be raised efficiently.

In particular, when the pneumatic tire 10 is mounted to the vehicle driven axle, the distribution of the driving force transmitted from the tread 12 to the road surface is greater at the tire equator CL side than at the shoulder side (see Fig. 6A), and so it is effective to make the inside notched portions 34 provided at the center blocks 22 larger.

In the pneumatic tire 10, out of the plural blocks provided at the tread 12, the second blocks 26 and the shoulder blocks 30 (the blocks to the tire width direction outsides of the blocks nearest to the tire equator CL in the tire width direction) are formed with the outside notched portions 40, 42 by notching the tire width direction outside corner portions on the tread-in side. Namely, in the second blocks 26 and the shoulder blocks 30 that are the blocks to the tire width direction outsides of the blocks nearest to the tire equator in the tire width direction tire equator, the external damage susceptible corner portions at the tire width direction outside of the tread-in side are omitted, and so the resistance to external damage of the blocks 26, 30 can be raised.

Namely, in cases such as the comparative example illustrated in Fig. 5 where the corner portions 120, 122, 124 are provided at the shoulder side of the tread-in side of each of the blocks 102, 104, 106, external damage is sometimes imparted to the corner portions 120, 122, 124 such as when a large force is imparted to the tread 101 from a non-smooth road surface (for example when there are stones on the road surface). However, this can be avoided in the present exemplary embodiment.

Moreover, the outside notched portions 42 provided at the shoulder blocks 30 disposed at the outermost sides in the tire width direction are formed larger than the outside notched portions 40 provided at the second blocks 26. Namely, since the sideways force input to the tire width direction outside of the tread 12 (the shoulder side) is larger than on the tire equator CL side (see Fig. 6B) and this is where blocks are susceptible to external damage during vehicle cornering, in the present invention the size of the outside notched portions 42 provided at the shoulder blocks 30 is made particularly large. The resistance to external damage of the shoulder blocks 30 can be efficiently raised thereby.

Moreover, in the pneumatic tire 10, the first lug grooves 20 and the second lug grooves 24 are inclined with respect to the tire width direction such that the tire width direction inside ends thereof are disposed further to the tire rotation direction front side than the tire width direction outside ends, and set with an angle of inclination with respect to the tire width direction within the range of from 5° to 15°. The water discharge ability of the first lug grooves 20 and the second lug grooves 24 can accordingly be raised, enabling wet weather performance to be enhanced. The third lug grooves 28 are also inclined with respect to the tire width direction such that the tire width direction inside ends thereof are disposed further to the tire rotation direction front side than the tire width direction outside ends, and so the water discharge ability of the third lug grooves 28 can be raised, enabling wet weather performance to be further enhanced.

Moreover, in the pneumatic tire 10, the blocks 22, 26, 30 have height dimensions set within the range of from 17mm to 23mm, have length dimensions along the tire circumferential direction set within the range of 30mm to 50mm and have width dimensions along the tire width direction set within the range of 30mm to 50mm. Thus not only are uneven wear of each of the blocks 22, 26, 30 (mainly heel-and-toe wear) and defects (block tear) of the each of blocks 22, 26, 30 prevented, but the necessary block rigidity can also be secured.

In the pneumatic tire 10, the inside notched portions 34, 36, 38 and the outside notched portions 40, 42 are set with notch lengths C1 to C10 within the range of from 2mm to 6mm. Stones can accordingly be suppressed from lodging between the inside notched portions 34 and the first lug grooves 20, between the inside notched portions 36 and the outside notched portions 40 and the second lug grooves 24, and between the inside notched portions 38 and the outside notched portions 42 and the third lug grooves 28.

Note that the pneumatic tire 10 according to the above exemplary embodiment is configured with a stipulated rotation direction block pattern formed in the tread 12, however the invention according to from first to sixth aspect are not limited thereto, and application is possible to a pneumatic tire with a non-stipulated rotation direction block pattern formed to a tread.

Moreover, although the pneumatic tire 10 in the above exemplary embodiment is configured including the outside notched portions 40, 42, the invention according to claim 1 is not limited thereto, and configuration may be made with the outside notched portions 40, 42 omitted.

Moreover, in the above exemplary embodiment, when providing what are referred to as tie-bars (raised bottom portions) to each of the lug grooves 20, 24, 28, preferably the depth dimension of the inside notched portions 34, 36, 38 along the height direction of each of the blocks 22, 26, 30 is set within a range of from 40% to 50% of the height dimension of each of the blocks 22, 26, 30. The inside notched portions 34, 36, 38 can thereby be provided without affecting the tie-bars, and the circumferential direction rigidity of each of the blocks 22, 26, 30 can be enhanced by the tie-bars, enabling heel-and-toe wear of each of the blocks 22, 26, 30 to be suppressed.

Moreover, the dimensions and the like of each of the portions described above are not limited by the numerical values of the exemplary embodiment, and appropriate variation is possible within a range not departing from the spirit of the present invention. Moreover obviously the scope of rights of the present invention is not limited by the above exemplary embodiment.

### Test Example

In order to confirm the advantageous effects of the present invention, the pneumatic tire 100 illustrated in Fig. 5 (Comparative Example) and the pneumatic tire 10 according to the exemplary embodiment (a pneumatic tire applied with the present invention, referred to below as "Example") are prepared, and running tests are performed using real cars.

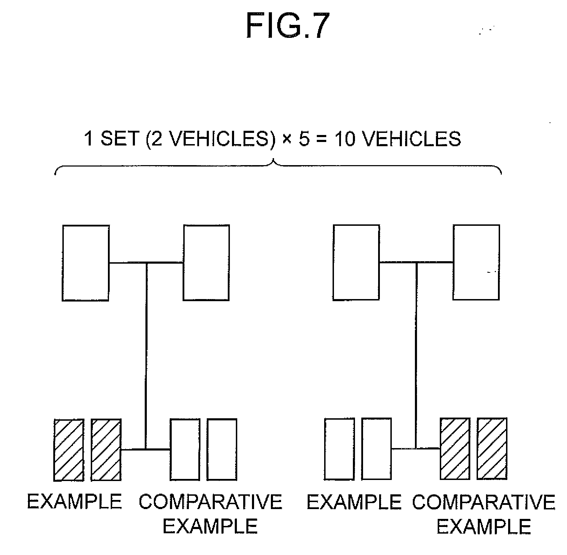

Details of the running tests are as follows.
- tire size: 315/80 R225
- pattern shape: blocks
- number of main grooves (circumferential direction grooves): 5
- loading: 2.5 ton to 4.0 ton
- internal pressure: 650kPa to 950kPa
- test method: road test
- test country: Saudi Arabia
- vehicle: 4 × 2 + 3T
- rim: 22.5 × 9.00
- number of test vehicles: 10 vehicles (total of 40 tires, 20 existing tires and 20 tires of the invention)
- test road surface: highway between Dammam, Riyadh and Jeddah (main), and general roads from the highway to the yard of the user (portion)
- test method: A-B, B-A method (see Fig. 7).

For the Comparative Example and the Example, the number of individual center blocks in which defects occur on the tire width direction inside portions of the tread-in side out of the 67 center blocks employed is ascertained when running for 100,000 km, and the results of Table 1 below are obtained.

**Table 1**

| Tire No. | Comparative Example (Individual No.) | Example (Individual No.) |
|---|---|---|
| 1 | 60 | 13 |
| 2 | 62 | 10 |
| 3 | 57 | 20 |
| 4 | 30 | 7 |
| 5 | 42 | 11 |
| 6 | 50 | 13 |
| 7 | 35 | 6 |
| 8 | 20 | 4 |
| 9 | 43 | 8 |
| 10 | 31 | 5 |
| 11 | 67 | 9 |
| 12 | 60 | 11 |
| 13 | 15 | 2 |
| 14 | 17 | 3 |
| 15 | 25 | 5 |
| 16 | 60 | 10 |
| 17 | 51 | 12 |
| 18 | 54 | 9 |
| 19 | 13 | 2 |
| 20 | 19 | 1 |

For the Comparative Example and the Example, the number of individual center blocks in which defects occur on the tire width direction outside portions of the tread-in side out of the 67 center blocks employed is ascertained when running for 100,000 km, and the results of Table 2 below are obtained.

**Table 2**

| Tire No. | Comparative Example (Individual No.) | Example (Individual No.) |
|---|---|---|
| 1 | 30 | 7 |
| 2 | 34 | 8 |
| 3 | 25 | 3 |
| 4 | 28 | 4 |
| 5 | 16 | 2 |
| 6 | 17 | 4 |
| 7 | 22 | 3 |
| 8 | 30 | 7 |
| 9 | 45 | 9 |
| 10 | 51 | 8 |
| 11 | 60 | 2 |
| 12 | 62 | 1 |
| 13 | 34 | 3 |
| 14 | 27 | 4 |
| 15 | 46 | 7 |
| 16 | 54 | 8 |
| 17 | 36 | 9 |
| 18 | 31 | 4 |
| 19 | 19 | 2 |
| 20 | 23 | 3 |

The above tests confirm that the resistance to external damage in the tire of the Example applied with the present invention is greatly raised compared to the tire of the Comparative Example. Note that similar advantageous effects are confirmed for the second blocks and the shoulder blocks.

## Claims

1. A pneumatic tire (10) comprising:
a tread (12) formed with a plurality of blocks (22, 26, 30) partitioned by a plurality of circumferential direction grooves (14, 16, 18) extending along a tire circumferential direction and by a plurality of width direction grooves (20, 24, 28) that intersect with the circumferential direction grooves (14, 16, 18); and
inside notched portions (34, 36, 38) formed by notching corner portions on tire width direction insides of tread-in sides of the blocks (22, 26, 30), **characterized in that** the inside notched portions (34) provided at blocks (22) nearest, in the tire width direction, to the tire equator are notched to a greater extent than the inside notched portions (36, 38) provided at other blocks (26, 30).

2. The pneumatic tire (10) of claim 1, wherein:
outside notched portions (40, 42) are formed at least at blocks (26, 30) that, of the plurality of blocks (22, 26, 30), are disposed further to the tire width direction outside than the blocks (22) nearest, in the tire width direction, to the tire equator by notching corner portions on the tire width direction outsides of the tread-in sides; and
the outside notched portions (42) provided at the blocks (30) disposed at the outermost sides in the tire width direction are notched to a greater extent than the outside notched portions (40) provided at other blocks (26).

3. The pneumatic tire (10) of claim 1 or claim 2, wherein:
a depth dimension along the block height direction of the inside notched portions (34, 36, 38) is set within a range of from 40% to 50% of the block height dimension.

4. The pneumatic tire (10) of any one of claim 1 to claim 3, wherein at least a width direction groove (20) that is, of the width direction grooves (20, 24, 28), nearest in the tire width direction to the tire equator, is inclined with respect to the tire width direction such that a tire width direction inside end is disposed further to a tire rotation direction front side than a tire width direction outside end, and is set with an angle of inclination with respect to the tire width direction within a range of from 5° to 15°.

5. The pneumatic tire (10) of any one of claim 1 to claim 4, wherein the blocks (22, 26, 30) are set with a height dimension within a range of from 17mm to 23mm, with a dimension along the tire circumferential direction within a range of from 30mm to 50mm, and with a dimension along the tire width direction within a range of from 30mm to 50mm.

6. The pneumatic tire (10) of any one of claim 1 to claim 5, wherein the inside notched portions (34, 36, 38) have a notch length (C1, C3, C5) along an end edge (22D, 26D, 30D) on the tread-in side of a tread face (22A, 26A, 30A) of the blocks (22, 26, 30) and a notch length (C2, C4, C6) along an end edge (22E, 26E, 30E) on the tire width direction inside of the tread face (22A, 26A, 30A) of the blocks (22, 26, 30) that are both set within a range of from 2mm to 6mm.

## Patentansprüche

1. Luftreifen (10), der Folgendes umfasst:
eine Lauffläche (12), die mit mehreren Blöcken (22, 26, 30) geformt ist, die durch mehrere Umfangsrichtungsrillen (14, 16, 18), die sich entlang einer Reifenumfangsrichtung erstrecken, und durch mehrere Breitenrichtungsrillen (20, 24, 28), die sich mit den Umfangsrichtungsrillen (14, 16, 18) überschneiden, unterteilt werden, und
innere gekerbte Abschnitte (34, 36, 38), die durch das Kerben von Eckabschnitten auf in der Reifenbreitenrichtung inneren Seiten von laufflächeninneren Seiten der Blöcke (22, 26, 30) geformt sind,
**dadurch gekennzeichnet, dass**
die inneren gekerbten Abschnitte (34), die an Blöcken (22) bereitgestellt werden, die, in der Reifenbreitenrichtung, dem Reifenäquator am nächsten sind, in einem größeren Ausmaß gekerbt sind als die inneren gekerbten Abschnitte (36, 38), die an anderen Blöcken (26, 30) bereitgestellt werden.

2. Luftreifen (10) nach Anspruch 1, wobei:
äußere gekerbte Abschnitte (40, 42) wenigstens an Blöcken (26, 30), die, von den mehreren Blöcken (22, 26, 30), weiter zu der in der Reifenbreitenrichtung äußeren Seite angeordnet sind als die Blöcke (22), die, in der Reifenbreitenrichtung, dem Reifenäquator am nächsten sind, durch das Kerben von Eckabschnitten auf in der Reifenbreitenrichtung äußeren Seiten der laufflächeninneren Seiten geformt sind, und
die äußeren gekerbten Abschnitte (42), die an den Blöcken (30) bereitgestellt werden, die an den äußersten Seiten in der Reifenbreitenrichtung angeordnet sind, in einem größeren Ausmaß gekerbt sind als die äußeren gekerbten Abschnitte (40), die an anderen Blöcken (26) bereitgestellt werden.

3. Luftreifen (10) nach Anspruch 1 oder Anspruch 2, wobei:
eine Tiefenabmessung entlang der Blockhöhenrichtung der inneren gekerbten Abschnitte (34, 36, 38) innerhalb eines Bereichs von 40 % bis 50 % der Blockhöhenabmessung festgesetzt ist.

4. Luftreifen (10) nach einem der Ansprüche 1 bis 3, wobei wenigstens eine Breitenrichtungsrille (20), die, von dem Breitenrichtungsrillen (20, 24, 28), in der Reifenbreitenrichtung dem Reifenäquator am nächsten ist, in Bezug auf die Reifenbreitenrichtung derart geneigt ist, dass ein in der Reifenbreitenrichtung inneres Ende weiter zu einer in der Reifenrotationsrichtung vorderen Seite angeordnet ist als ein in der Reifenbreitenrichtung äußeres Ende und mit einem Neigungswinkel in Bezug auf die Reifenbreitenrichtung innerhalb eines Bereichs von 5° bis 15° festgesetzt ist.

5. Luftreifen (10) nach einem der Ansprüche 1 bis 4, wobei die Blöcke (22, 26, 30) mit einer Höhenabmessung innerhalb eines Bereichs von 17 mm bis 23 mm, mit einer Abmessung entlang der Reifenumfangsrichtung innerhalb eines Bereichs von 30 mm bis 50 mm und mit einer Abmessung entlang der Reifenbreitenrichtung innerhalb eines Bereichs von 30 mm bis 50 mm festgelegt sind.

6. Luftreifen (10) nach einem der Ansprüche 1 bis 5, wobei die inneren gekerbten Abschnitte (34, 36, 38) eine Kerbenlänge (C1, C3, C5) entlang einer Endkante (22D, 26D, 30D) auf der laufflächeninneren Seite einer Laufflächenseite (22A, 26A, 30A) der Blöcke (22, 26, 30) und eine Kerbenlänge (C2, C4, C6) entlang einer Endkante (22E, 26E, 30E) auf der in der Reifenbreitenrichtung inneren Seite der Laufflächenseite (22A, 26A, 30A) der Blöcke (22, 26, 30) aufweisen, die beide innerhalb eines Bereichs von 2 mm bis 6 mm festgesetzt sind.

## Revendications

1. Bandage pneumatique (10), comprenant :
une bande de roulement (12), comportant plusieurs pavés (22, 26, 30) divisés par plusieurs rainures dans la direction circonférentielle (14, 16, 18), s'étendant le long d'une direction circonférentielle du bandage pneumatique, et par plusieurs rainures dans la direction de la largeur (20, 24, 28) coupant les rainures dans la direction circonférentielle (14, 16, 18) ; et
des parties à encoches intérieures (34, 36, 38) formées par encochage de parties de coin sur les faces internes dans la direction de la largeur des côté interne de la bande de roulement des pavés (22, 26, 30) ;
**caractérisé en ce que** :
les parties à encoches intérieures (34) formées au niveau des pavés (22) les plus proches, dans la direction de la largeur du bandage pneumatique, de l'équateur du bandage pneumatique, sont encochées davantage que les parties à encoches intérieures (36, 38) agencées au niveau d'autres pavés (26, 30).

2. Bandage pneumatique (10) selon la revendication 1, dans lequel :
des parties à encoches extérieures (40, 42) sont formées au moins au niveau des pavés (26, 30), qui, parmi les plusieurs pavés (22, 26, 30), sont agencées davantage vers l'extérieur, dans la direction de la largeur du bande pneumatique, que les pavés (22) les plus proches, dans la direction de la largeur du bandage pneumatique, de l'équateur du bandage pneumatique, par encochage des parties de coin sur les faces externes, dans la direction de la largeur du bandage pneumatique, des côtés internes de la bande de roulement ; et
les parties à encoches extérieures (42) agencées au niveau des pavés (30) agencés au niveau des côtés externes extrêmes, dans la direction de la largeur du bandage pneumatique, sont encochées davantage que les parties à encoches extérieures (40) agencées au niveau d'autres pavés (26).

3. Bandage pneumatique (10) selon les revendications 1 ou 2, dans lequel :
une dimension de la profondeur, le long de la direction de la hauteur du pavé, des parties à encoches intérieures (34, 36, 38) est fixée dans un intervalle représentant 40% à 50% de la dimension de la hauteur du pavé.

4. Bandage pneumatique (10) selon l'une quelconque des revendications 1 à 3, dans lequel au moins une rainure dans la direction de la largeur (20), qui est, parmi les rainures dans la direction de la largeur (20, 24, 28) la plus proche, dans la direction de la largeur du bandage pneumatique, de l'équateur du bandage pneumatique, est inclinée par rapport à la direction de la largeur du bandage pneumatique, de sorte qu'une extrémité intérieure, dans la direction de la largeur du bandage pneumatique, est agencée davantage vers un côté avant, dans la direction de rotation du bandage pneumatique, qu'une extrémité extérieure dans la direction de la largeur du bandage pneumatique, et est fixée avec un angle d'inclinaison par rapport à la direction de la largeur du bandage pneumatique compris dans un intervalle allant de 5° à à 15°.

5. Bandage pneumatique (10) selon l'une quelconque des revendications 1 à 4, dans lequel les pavés (22, 26, 30) sont fixés avec une dimension de la hauteur comprise dans un intervalle allant de 17 mm à 23 mm, une dimension le long de la direction circonférentielle du bandage pneumatique étant comprise dans un intervalle allant de 30 mm à 50 mm, et une dimension le long de la direction de la largeur du bandage pneumatique étant comprise dans un intervalle allant de 30 mm à 50 mm.

6. Bandage pneumatique (10) selon l'une quelconque des revendications 1 à 5, dans lequel les parties à encoches intérieures (34, 36, 38) ont une longueur d'encoche (C1, C3, C5) le long d'un bord d'extrémité (22D, 26D, 30D), sur le côté interne de la bande de roulement d'une face de la bande de roulement (22A, 26A, 30A), des pavés (22, 26, 30) et une longueur d'encoche (C2, C4, C6) le long d'un bord d'extrémité (22E, 26E, 30E) sur le côté interne de la face de la bande de roulement (22A, 26A, 30A), dans la direction de la largeur du bandage pneumatique, des pavés (22, 26, 30), fixées toutes les deux dans un intervalle allant de 2 mm à 6 mm.
